# EUROPEAN PATENT APPLICATION

(11) **EP 4 764 015 A1**
(43) Date of publication of application: **24.06.2026**
(21) Application number: 25857486.2
(22) Date of filing: 21.08.2025
(51) Int. Cl.: C22B 26/12, C22B 3/06, C22B 3/22, H01M 10/54

(54) **METHOD FOR RECOVERING LITHIUM**

(30) Priority: 23.08.2024 KR 20240113636; 20.08.2025 KR 20250115680
(71) Applicant: LG Energy Solution, Ltd., Seoul 07335 (KR)
(72) Inventor: LEE, Dongseok, Daejeon 34122 (KR); KWON, Ohsung, Daejeon 34122 (KR); YU, Hyemin, Daejeon 34122 (KR); KIM, Donghyeon, Daejeon 34122 (KR); NOH, Taechong, Daejeon 34122 (KR); LEE, Jeongbae, Daejeon 34122 (KR)
(74) Representative: Hoffmann Eitle
(86) International application number: PCT/KR2025/012687
(87) International publication number: WO 2026/043298

(57) **Abstract**

The present invention relates to a method of recovering lithium. More particularly, the present invention relates to a method of recovering lithium, the method including step (a) of adding a portion of a cathode material powder including a cathode active material with an olivine structure and an aqueous hydrogen peroxide solution to an acidic solution to form a first leachate and a first leaching residue; step (b) of separating the first leachate and the first leaching residue; step (c) of adding an aqueous hydrogen peroxide solution and a remaining portion of the cathode material powder of step (a) to the separated first leachate to form a second leachate and a second leaching residue; and step (d) of separating the second leachate and the second leaching residue, wherein the weight of the cathode material powder added in step (c) is 0.16 to 1.45 times the weight of the cathode material powder added into the acidic solution in step (a).

According to the present invention, the present invention has an effect of providing a method of recovering lithium. According to the method of the present invention, by adding a portion of a waste cathode material powder including a cathode active material with an olivine structure to an acidic solution and then adding an aqueous hydrogen peroxide solution thereto to obtain a leachate, and adding an aqueous hydrogen peroxide solution and the remaining portion of the waste cathode material powder to the leachate to increase the pH of the leachate to remove iron (Fe) and phosphorus (P) components, high-purity lithium may be recovered economically.

## Description

### [Technical Field]

### [Cross-Reference to Related Applications]

This application claims priority to Korean Patent Application No. 10-2024-0113636, filed on August 23, 2024, and Korean Patent Application No. 10-2025-0115680, re-filed on August 20, 2025, based on the priority of the above patent, in the Korean Intellectual Property Office, the disclosures of each of which are incorporated herein by reference.

The present invention relates to a method of recovering lithium. More particularly, according to the method of the present invention, by adding a portion of a cathode material powder including a cathode active material with an olivine structure and an aqueous hydrogen peroxide solution to an acidic solution to obtain a leachate, and then adding the aqueous hydrogen peroxide solution and the remaining portion of the waste cathode material powder to the leachate to increase the pH of the leachate to remove iron (Fe) and phosphorus (P) components as leaching residues, high-purity lithium may be recovered economically.

### [Background Art]

Demand for lithium-ion batteries has been steadily increasing along with the portable electronic device market since the 1990s, and has recently been increasing further worldwide due to the rapid expansion of the electric vehicle market. This trend could lead to instability in the supply and demand of lithium resources in the near future, and the continuous accumulation of waste batteries could cause major environmental problems. To solve these problems, recycling of used lithium-ion batteries is a very important technological challenge.

A lithium-ion battery is largely composed of a cathode formed by coating a metal foil such as aluminum with a cathode active material layer, an anode formed by coating a metal foil such as copper with an anode active material layer, a separator that prevents the cathode and anode from mixing, and an electrolyte solution that allows lithium ions to move between the cathode and anode.

A cathode accounts for more than 60 % of the cost of a lithium-ion battery. Lithium cobalt oxide (LiCoO₂) is used as the cathode because the lithium cobalt oxide has excellent reversibility, low self-discharge rate, high capacity, and high energy density, and is easy to synthesize. Alternatively, to reduce the use of expensive cobalt, lithium complex oxides containing Ni, Mn, and the like, such as lithium nickel cobalt manganese oxide (LiNiMnCoO₂), lithium manganese oxide (LiMnO₂), and lithium iron phosphate (LiFePO₄), are used. Since the cathode material contains about 5 to 7 % lithium, a method of recovering lithium from cathode materials of waste lithium-ion batteries is receiving significant attention.

However, lithium iron phosphate (LiFePO₄) has a very stable cubic crystalline structure, and in order to break down this stable structure to recover valuable metals, it is necessary to dissolve Li, Fe, and P using highly concentrated strong acids or strong bases, followed by extraction of Li. In this process, impurities such as Fe and P are introduced, causing a reduction in the purity of the recovered lithium compounds. To solve this problem, basic compounds such as NaOH are added to remove impurities, which increases process costs and reduces economic efficiency.

Therefore, in a method of recovering lithium from a cathode material having a very stable crystal structure obtained from the cathode of a waste lithium-ion battery, there is a need to develop a method of efficiently and economically removing impurities such as Fe.

### [Related Art Documents]

### [Patent Documents]

KR 2012-0031832 A

### [Disclosure]

### [Technical Problem]

Therefore, the present invention has been made in view of the above problems, and it is one object of the present invention to provide a method of recovering lithium from a cathode material of a waste lithium-ion battery. According to the method of the present invention, by adding a portion of a waste cathode material powder including a cathode active material with an olivine structure and an aqueous hydrogen peroxide solution to an acidic solution to obtain a leachate, and then adding the aqueous hydrogen peroxide solution and the remaining portion of the waste cathode material powder to the leachate to precipitate and remove impurities such as Fe and P, high-purity lithium may be recovered economically.

The above and other objects can be accomplished by the present invention described below.

### [Technical Solution]

I) In accordance with one aspect of the present invention, provided is a method of recovering lithium, the method including (a) adding a portion of a cathode material powder including a cathode active material with an olivine structure and an aqueous hydrogen peroxide solution to an acidic solution to form a first leachate and a first leaching residue; (b) separating the first leachate and the first leaching residue; (c) adding an aqueous hydrogen peroxide solution and a remaining portion of the cathode material powder of step (a) to the separated first leachate to form a second leachate and a second leaching residue; and (d) separating the second leachate and the second leaching residue, wherein a weight of the cathode material powder added in step (c) is 0.16 to 1.45 times a weight of the cathode material powder added into the acidic solution in step (a).
II) According to I), the cathode material having an olivine structure may be preferably a compound represented by Chemical Formula 1 below.

   [Chemical Formula 1] Li₁₊ₐFe_{1-b}M_{b}(PO_{4-c})X_{c}

   In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c are -0.5≤a≤0.5, 0≤b≤0.5, and 0≤c≤0.1, respectively.
III) According to I) or II), the cathode material having an olivine structure may preferably include lithium iron phosphate.
IV) According to I) to III), the cathode material powder may be obtained by crushing and pulverizing a cathode of a waste lithium-ion battery and separating a cathode material powder and a current collector.
V) According to I) to IV), in step (a), the acidic solution may preferably include 0.5 to 0.8 mol of an acid per mol of the cathode active material in the cathode material powder added to the acidic solution in step (a).
VI) According to I) to V), in step (a), the acidic solution may preferably have a molar concentration (mol/L) of 0.2 to 0.6.
VII) According to I) to VI), in step (a), the acidic solution may be preferably a solution containing one or more selected from the group consisting of sulfuric acid, hydrochloric acid, hypochlorous acid, nitric acid, carbonic acid, acetic acid, and oxalic acid.
VIII) According to I) to VII), in step (a), the aqueous hydrogen peroxide solution may preferably be added in an amount such that hydrogen peroxide constitutes at least 3 % by volume of the acidic solution.
IX) According to I) to VIII), in step (c), the aqueous hydrogen peroxide solution may preferably be added in an amount such that hydrogen peroxide constitutes at least 2.5 % by volume of the separated first leachate.
X) According to I) to IX), the second leachate formed in step (c) may preferably have a pH of 5.5 or more.
XI) According to I) to X), the second leaching residue separated in step (d) may preferably include Fe(OH)₃ and LiFePO₄.
XII) According to I) to XI), the second leachate separated in step (d) may preferably have an Fe content of 30 mg/L or less and a P content of 350 mg/L or less.
XIII) According to I) to XII), the second leaching residue separated in step (d) may be preferably added to the acidic solution of step (a).
XIV) According to I) to XIII), in steps (b) and (d), separation of the leachate and the leaching residue may be preferably performed using reduced pressure filtration.
XV) In accordance with another aspect of the present invention, provided is lithium recovered using the method of recovering lithium according to any one of I) to XIV).

### [Advantageous Effects]

According to the present invention, by adding a portion of a waste cathode material powder having an olivine structure, which is a very stable structure, and an aqueous hydrogen peroxide solution to an acidic solution to obtain a leachate, and then adding the aqueous hydrogen peroxide solution and the remaining portion of the waste cathode material powder to the leachate to precipitate iron (F) and phosphorus (P) components and remove the iron (F) and phosphorus (P) components as leaching residues, the purity and recovery rate of lithium recovered from the waste cathode can be greatly improved, and lithium can be recovered economically. In addition, economic efficiency can be further improved by reintroducing the removed leaching residues into the acidic solution.

### [Description of Drawings]

The drawings attached to this specification illustrate embodiments of the present invention and, together with the detailed description given below, serve to further understand the technical idea of the present invention. Therefore, the present invention should not be construed as being limited to the matters described in these drawings.

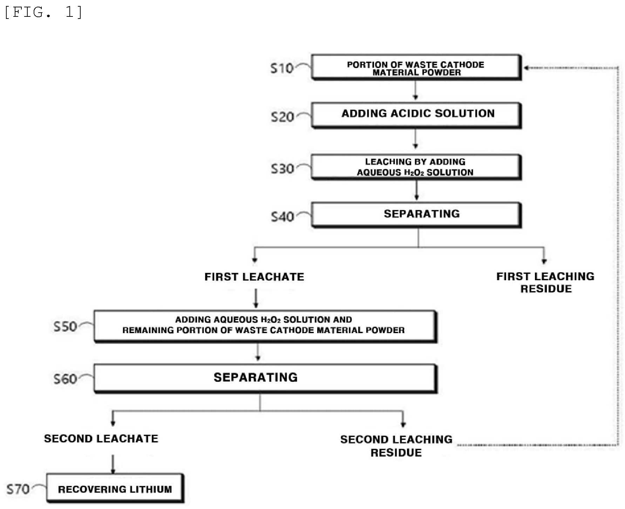

FIG. 1 is a process diagram for a method of recovering lithium from a cathode material of a waste lithium-ion battery as one embodiment according to the present invention.

### [Best Mode]

While the present inventors were conducting research on a method of recovering lithium with high purity from a lithium-ion battery cathode material having a highly stable olivine structure, when a portion of a waste cathode material powder having an olivine structure and an aqueous hydrogen peroxide solution were added to an acidic solution to obtain a leachate, and then the aqueous hydrogen peroxide solution and the remaining portion of the waste cathode material powder were added to the leachate to precipitate impurities such as P and Fe and remove the impurities as leaching residues, the pH of leachate was increased without adding a basic compound, and iron and phosphorus components were easily removed as leaching residues, greatly improving the recovery rate and purity of lithium, thereby securing economic efficiency. In addition, process costs were reduced and economic efficiency was further improved by performing a series of steps of leaching the removed leaching residues by adding the removed leaching residues into an acidic solution and then into an aqueous hydrogen peroxide solution. Based on these results, the present inventors conducted further studies to complete the present invention.

Hereinafter, a method of recovering lithium of the present invention is described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recovering lithium

A method of recovering lithium of the present invention includes step (a) of adding a portion of a cathode material powder including a cathode active material with an olivine structure and an aqueous hydrogen peroxide solution to an acidic solution to form a first leachate and a first leaching residue; step (b) of separating the first leachate and the first leaching residue; step (c) of adding an aqueous hydrogen peroxide solution and a remaining portion of the cathode material powder of step (a) to the separated first leachate to form a second leachate and a second leaching residue; and step (d) of separating the second leachate and the second leaching residue. The weight of the cathode material powder added in step (c) is 0.16 to 1.45 times the weight of the cathode material powder added into the acidic solution in step (a). In this case, by increasing the pH of the leachate from which waste cathode material powder is leached, impurities such as iron (Fe) and phosphorus (P) may be easily separated as leaching residues without using a basic compound. Accordingly, the purity and recovery rate of recovered lithium may be increased, and process costs may be reduced.

Hereinafter, each step of the method of recovering lithium is described in detail.

### (a) Adding a portion of a cathode material powder including a cathode active material with an olivine structure and an aqueous hydrogen peroxide solution to an acidic solution to form a first leachate and a first leaching residue

The method of recovering lithium of the present invention includes step (a) of adding a portion of a cathode material powder including a cathode active material with an olivine structure and an aqueous hydrogen peroxide solution to an acidic solution to form a first leachate and a first leaching residue. In this case, lithium (Li), iron (Fe), and phosphorus (P) elements in the waste cathode material may be leached, and the leached iron and phosphorus components may be precipitated in the form of FePO₄ and easily removed as leaching residues, thereby increasing the recovery rate and selectivity of lithium.

For example, when a portion of a cathode material powder including a cathode active material with an olivine structure and an aqueous hydrogen peroxide solution are added to an acidic solution, the portion of a cathode material powder including a cathode active material with an olivine structure may be added to the acidic solution, and then the aqueous hydrogen peroxide solution may be added thereto. As a specific example, after the portion of a cathode material powder including a cathode active material with an olivine structure is added, the aqueous hydrogen peroxide solution may be added immediately or sequentially. Alternatively, after the portion of a cathode material powder including a cathode active material with an olivine structure is added and the cathode material powder is dissolved, the aqueous hydrogen peroxide solution may be added. In this case, lithium (Li), iron (Fe), and phosphorus (P) elements in the waste cathode material may be leached, and the leached iron and phosphorus components may be precipitated in the form of FePO₄ and easily removed as leaching residues, thereby increasing the recovery rate and selectivity of lithium.

For example, when a portion of a cathode material powder including a cathode active material with an olivine structure and an aqueous hydrogen peroxide solution are added to an acidic solution, the portion of a cathode material powder including a cathode active material with an olivine structure and the aqueous hydrogen peroxide solution may be added at the same time. In this case, lithium (Li), iron (Fe), and phosphorus (P) elements in the waste cathode material may be leached, and the leached iron and phosphorus components may be precipitated in the form of FePO₄ and easily removed as leaching residues, thereby increasing the recovery rate and selectivity of lithium.

When the aqueous hydrogen peroxide solution is added before adding the cathode material powder to the acidic solution, hydrogen peroxide may decompose into water and lose the oxidizing power thereof.

For example, in step (a), a portion of the cathode material powder and an aqueous hydrogen peroxide solution may be added continuously or batchwise, preferably batchwise. In this case, lithium may be leached sufficiently and stably. The batch injection may be performed simultaneously with the start of stirring or immediately before stirring. In this case, lithium may be sufficiently leached.

In the present disclosure, "continuous feed" means that components are not fed batchwise. For example, within a range of leaching time, components may be fed for 10 minutes or more or 30 minutes or more in drop-by-drop, little-by-little, step-by-step, or continuous flow.

For example, step (a) may be performed under stirring. In this case, waste cathode material powder may be easily leached within a short period of time.

For example, the stirring time may be 10 to 150 minutes, preferably 30 to 140 minutes, more preferably 60 to 130 minutes, still more preferably 90 to 130 minutes. Within this range, waste cathode material powder may be easily leached within a short period of time.

For example, the stirring speed may be 300 to 700 rpm, preferably 350 to 650 rpm, more preferably 400 to 600 rpm, still more preferably 450 to 550 rpm. Within this range, lithium, iron, and phosphorus elements in the waste cathode material powder may be easily leached to form a first leachate and a first leaching residue.

In the present disclosure, a stirring method or stirring device generally used in the technical field to which the present invention belongs may be used in the present invention without particular limitation.

For example, step (a) may be performed at room temperature. In this case, lithium, iron, and phosphorus elements in the waste cathode material powder may be easily leached to form a first leachate and a first leaching residue.

In the present disclosure, room temperature may be any point within the range of 20 ± 5 °C.

In the present disclosure, the olivine structure refers to a type of cathode material structure characterized by a cubic lattice arrangement in a three-dimensional form, in which phosphorus-oxygen (P-O) is strongly linked, enabling the structure to maintain the integrity thereof even when all lithium ions are removed. This results in less performance degradation during charge and discharge cycles and provides excellent thermal stability. In addition, while the olivine structure is economically advantageous due to the use of inexpensive iron instead of costly cobalt, the energy density, electrical conductivity, and lithium-ion diffusivity thereof are lower compared to other cathode materials.

The olivine structure may be confirmed by X-ray diffraction analysis (XRD).

For example, the cathode active material having an olivine structure may be a compound represented by Chemical Formula 1 below. In this case, high-temperature stability, lifespan characteristics, and economic efficiency may be excellent.

[Chemical Formula 1] Li₁₊ₐFe_{1-b}M_{b}(PO_{4-c})X_{c}

(In Chemical Formula 1, M includes one or more elements selected from the group consisting of Al, Mg, Ni, Co, Mn, Ti, Ga, Cu, V, Nb, Zr, Ce, In, Zn, and Y; X includes one or more elements selected from the group consisting of F, S, and N; and a, b, and c are -0.5≤a≤0.5, 0≤b≤0.5, and 0≤c≤0.1, respectively.)

For example, the cathode active material having an olivine structure may include lithium iron phosphate. In this case, high-temperature stability, lifespan characteristics, and economic efficiency may be excellent.

The lithium iron phosphate may preferably include LiFePO₄ having an olivine structure. In this case, high-temperature stability, lifespan characteristics, and economic efficiency may be excellent.

For example, the cathode material powder containing the cathode active material having an olivine structure may be obtained by crushing a cathode of a waste lithium-ion battery and separating cathode material powder and a current collector. In this case, economic benefits may be achieved because expensive lithium, FePO₄, and the like may be recovered and recycled.

For example, the cathode of the waste lithium-ion battery may be a discarded lithium-ion battery cathode, a defective product generated during a cathode coating process, or cathode scrap discarded after cutting an electrode plate, preferably a discarded lithium-ion battery cathode. In this case, economic benefits may be achieved because expensive lithium, FePO₄, and the like may be recovered and recycled.

For example, the crushing may be cutting or shredding of discarded lithium-ion battery cathodes, and may preferably be performed using dry pulverizing equipment. Specifically, the crushing may be performed using a shredder, a hand mill, a pin mill, a disc mill, a cutting mill, or a hammer mill. In this case, powderization may be facilitated.

For example, the crushed cathode material may be pulverized using a hand mill, a pin mill, a disc mill, a cutting mill, a hammer mill, a mixer, or a blender, preferably a cutting mill. In this case, current collector pieces may be chopped into small pieces, and cathode material may be separated from the current collector pieces.

For example, crushing and pulverizing may be performed using the same equipment. In this case, pulverizing may be performed after crushing. In this case, pulverizing and crushing may be performed by adjusting the size or rotation speed of a roller.

For example, the pulverized cathode material may be obtained as a powder through sieving using a sieve. In this case, by separating the cathode material powder and the current collector and uniformizing the particle size of the cathode material powder, leaching of the cathode material powder may be performed more easily.

In step (a), the acidic solution may contain an acid in an amount of 0.5 to 0.8 mol, preferably 0.55 to 0.75 mol, more preferably 0.60 to 0.73 mol, still more preferably 0.65 to 0.70 mol per mol of cathode active material in the waste cathode material powder added into the acidic solution of step (a). Within this range, lithium, iron, and phosphorus elements in the waste cathode material are leached by the acidic solution and the subsequent process, step (b), and the leached iron and phosphorus components are precipitated in the form of FePO₄ and easily removed as leaching residues, thereby increasing the recovery rate and selectivity of lithium.

In the present disclosure, the content (mol) of cathode active material in the cathode material may be measured by a method commonly used to measure the content of cathode active material in the technical field to which the present invention belongs. For example, the content of cathode active material may be calculated through the contents and molecular weights of metal components measured through ICP analysis. As a specific example, 0.01 g of cathode material, 3 mL of HCl, and 0.5 mL of H₂O₂ are added to a conical tube, mixed, and heated to dissolve. The dissolved cathode material is then placed in a 50 mL tube and diluted. Then, the content (mol) of the metal component may be measured through ICP analysis.

For example, the acidic solution may be a solution containing an acid at a molar concentration (mol/L) of 0.2 to 0.6, preferably 0.3 to 0.5, more preferably 0.35 to 0.45. Within this range, lithium, iron, and phosphorus elements in the waste cathode material may be leached, and the leached iron and phosphorus elements may be precipitated in the form of FePO₄ and removed as leaching residues, thereby increasing the recovery rate and selectivity of lithium.

For example, the acidic solution may have a pH of 3 or less or a pH of 0 to 3, preferably 0 to 2, more preferably 0 to 1. Within this range, lithium, iron, and phosphorus elements in the waste cathode material may be easily leached, and the recovery rate and selectivity of lithium may be increased.

In the present disclosure, pH may be measured by a measurement method commonly used in the technical field to which the present invention belongs. Unless otherwise specified, pH may be measured using a general pH measuring device at room temperature. Specifically, Thermo Scientific Orion Star A Series may be used.

The acidic solution may be preferably an aqueous acid solution. In this case, lithium, iron, and phosphorus elements in the waste cathode material may be easily leached, and the recovery rate and selectivity of lithium may be increased.

For example, the acidic solution may be a solution containing one or more selected from the group consisting of sulfuric acid, hydrochloric acid, hypochlorous acid, nitric acid, carbonic acid, acetic acid, and oxalic acid, preferably a solution containing sulfuric acid, more preferably an aqueous sulfuric acid solution. In this case, lithium, iron, and phosphorus elements in the waste cathode material may be easily leached, and the recovery rate and selectivity of lithium may be increased.

For example, the solid-to-liquid ratio of the waste cathode material powder to the acidic solution may be 1 g/6 ml to 1 g/15 ml, preferably 1 g/7 ml to 1 g/13 ml, more preferably 1 g/8 ml to 1 g/12 ml, still more preferably 1 g/9 ml to 1 g/11 ml. Within this range, lithium, iron, and phosphorus elements in the waste cathode material may be easily leached, and the recovery rate and selectivity of lithium may be increased.

In the present disclosure, the solid-to-liquid ratio refers to the volume of liquid relative to the weight of solids, i.e., the volume (mL) of acidic solution relative to the content (g) of cathode material powder.

After the waste cathode material powder is added into an acidic solution, an aqueous hydrogen peroxide solution is added. At this time, hydrogen peroxide acts as an oxidizing agent, oxidizing Fe²⁺ to Fe³⁺ and then precipitating Fe³⁺ in the form of FePO₄, which may be easily removed as the first leaching residue.

In the present disclosure, leaching refers to selectively dissolving metal elements or compounds contained in a solid material using a solvent such as an inorganic acid, organic acid, or alkali.

For example, in step (a), the aqueous hydrogen peroxide solution may be added in an amount such that hydrogen peroxide constitutes at least 3 % by volume of the acidic solution, preferably 3 to 20 % by volume of the acidic solution, more preferably 3.5 to 15 % by volume of the acidic solution, still more preferably 3.7 to 10 % by volume of the acidic solution, still more preferably 3.7 to 5 % by volume of the acidic solution. Within this range, iron (Fe) and phosphorus (P) components may be precipitated in the form of FePO₄ and removed as first leaching residues.

For example, in step (a), the aqueous hydrogen peroxide solution may be added in an amount such that hydrogen peroxide is 1.6 mol or more, preferably 1.6 to 2.4 mol, more preferably 1.7 to 2.3 mol, still more preferably 1.8 to 2.2 mol, still more preferably 1.9 to 2.2 mol per mol of the cathode active material of the waste cathode material powder. Within this range, Fe²⁺ is oxidized to Fe³⁺, easily combined with phosphorus (P) component, precipitated in the form of FePO₄, and easily removed as the first leaching residue. In step (a), when the concentration of the aqueous hydrogen peroxide solution is less than 1.6 mol, unoxidized Fe²⁺ may remain in the leachate, which may reduce the purity of the finally recovered lithium. On the other hand, when an excessive amount of aqueous hydrogen peroxide solution is added, process costs increase, the concentration of lithium in leachate decreases, the recovery rate of lithium decreases, and process costs increase in a concentration process for recovering lithium.

For example, the aqueous hydrogen peroxide solution may be an aqueous solution containing 25 to 40 % by weight, preferably 27 to 37 % by weight, more preferably 30 to 35 % by weight of hydrogen peroxide. Within this range, iron (Fe) and phosphorus (P) components may be precipitated in the form of FePO₄ and may be easily removed as first leaching residues.

### (b) Separating the first leachate and the first leaching residue

The method of recovering lithium of the present invention may include step (b) of separating the first leachate and the first leaching residue. In this case, since iron and phosphorus components are precipitated in the form of FePO₄ and easily removed as first leaching residues, impurities in the first leachate may be reduced, which may increase the purity and recovery rate of lithium. Furthermore, Fe²⁺ and PO₄³⁻ remaining in the first leachate may be easily removed in the subsequent process.

For example, in step (b), the separation of the first leachate and the first leaching residue may be performed using reduced pressure filtration. In this case, the leachate and the leaching residue may be easily separated through a simple process, process costs may be reduced, and environmental friendliness may be achieved.

The reduced pressure filtration may preferably be vacuum filtration, and specifically vacuum filtration using a filtration flask. In this case, the leachate and the leaching residue may be easily separated.

In the present disclosure, vacuum filtration commonly used in the technical field to which the present invention belongs may be used in the present invention without particular limitation. For example, vacuum filtration may include filtration under a partial vacuum or low pressure.

### (c) Adding the aqueous hydrogen peroxide solution and the remaining portion of the cathode material powder of step (a) to the separated first leachate to form a second leachate and a second leaching residue

The method of recovering lithium of the present invention may include step (c) of adding the aqueous hydrogen peroxide solution and the remaining portion of the waste cathode material powder of step (a) to the separated first leachate to form a second leachate and a second leaching residue. In this case, by increasing the pH of the first leachate without adding a basic compound, the residual iron and phosphorus components are easily removed as second leaching residues, thereby increasing the purity and recovery rate of lithium and improving economic efficiency.

When the aqueous hydrogen peroxide solution and the waste cathode material powder of step (a) are added to the separated first leachate, H⁺ in the first leachate and the waste cathode material powder react to increase the pH, and the dissolved Fe²⁺ in the process is oxidized to Fe³⁺ by hydrogen peroxide.

In the present disclosure,"a portion" and "the remaining portion" are terms used to indicate the amounts of fractionated input based on the total amount of cathode material powder input in steps (a) and (c), and are not limited by container, location, source or origin. Accordingly, both the cathode material powder input in step (a) and the cathode material powder input in step (c) are cathode material powders obtained from the cathode of a waste lithium-ion battery, and there is no particular limitation as long as the cathode material powder is obtained from the cathode of a waste lithium-ion battery according to the present invention. As a specific example, the cathode material powder may be a cathode material powder obtained from a cathode of the same waste lithium-ion battery or a cathode material powder obtained from a cathode of another waste lithium-ion battery.

For example, the weight of the waste cathode material powder introduced in step (c) may be 0.16 to 1.45 times, preferably 0.18 to 1.2 times, more preferably 0.2 to 1.0 time, still more preferably 0.2 to 0.7 times, still more preferably 0.2 to 0.5 times, still more preferably 0.2 to 0.4 times the weight of the waste cathode material powder added to the acidic solution of step (a). Within this range, H⁺ in the first leachate is consumed to increase the pH without adding a basic compound, so that residual iron and phosphorus components may be easily and economically removed, greatly increasing the purity and recovery rate of recovered lithium. When the waste cathode material powder is added in excessive amounts, Li₃PO₄ is formed in leachate, causing lithium loss and reducing the recovery rate of lithium.

For example, in step (c), the aqueous hydrogen peroxide solution may be added in an amount such that hydrogen peroxide constitutes at least 2.5 % by volume of the separated first leachate, preferably 2.5 to 17 % by volume of the separated first leachate, more preferably 2.7 to 13 % by volume of the separated first leachate, still more preferably 2.7 to 7 % by volume of the separated first leachate, still more preferably 2.7 to 5 % by volume of the separated first leachate. Within this range, impurities such as residual iron and phosphorus components in the first leachate may be easily removed as second leaching residues, thereby greatly increasing the purity and recovery rate of lithium.

For example, in step (c), hydrogen peroxide may be added in an amount of 1.3 mol or more, preferably 1.3 to 2 mol, more preferably 1.4 to 1.9 mol, still more preferably 1.5 to 1.8 mol, still more preferably 1.5 to 1.7 mol per mol of the cathode active material in the waste cathode material powder added to the acidic solution of step (a). Within this range, the purity and recovery rate of lithium may be significantly increased because residual iron and phosphorus components in the first leachate are easily removed as second leaching residues.

For example, the second leachate formed in step (c) may have a pH of 5.5 or more, preferably 6 or more, more preferably 6.5 or more, still more preferably 6.5 to 9.5, still more preferably 6.5 to 8.5, still more preferably 6.5 to 7.5. Within this range, the purity and recovery rate of lithium may be significantly increased and economic efficiency may be improved by easily removing iron and phosphorus components as second leaching residues.

In step (c), the reaction in which the Fe component is removed due to an increase in the pH of the second leachate is as shown in Reaction Formula 1 below, and for this reaction to occur, the pH must be 5.5 or higher.

[Reaction Formula 1] **Mⁿ⁺ + nH₂O → M(OH)ₙ + nH⁺**

(In Reaction Formula 1, Mⁿ⁺ represents Fe ions, and n is an integer greater than or equal to 1.)

### (d) Separating the second leachate and the second leaching residue

The method of recovering lithium of the present invention may include step (d) of separating the second leachate and the second leaching residue. In this case, lithium may be recovered with high yield from the second leachate. Furthermore, a step for recovering lithium using the separated second leaching residue may be implemented, resulting in excellent economic efficiency.

For example, in step (d), the separation of the second leachate and the second leaching residue may be performed using reduced pressure filtration. In this case, the leachate and the leaching residue may be easily separated using a simple process, reducing process costs and providing the advantage of eco-friendliness.

The reduced pressure filtration may preferably be vacuum filtration, and specifically vacuum filtration using a filtration flask. In this case, the leachate and the leaching residue may be easily separated.

For example, the second leaching residue separated in step (d) may include Fe(OH)₃ and LiFePO₄. In this case, iron and phosphorus components remaining in the first leachate may be easily removed, greatly increasing the recovery rate and purity of lithium.

For example, the second leachate separated in step (d) may contain Fe in an amount of 30 mg/L or less, preferably 20 mg/L or less, more preferably 10 mg/L or less, still more preferably 5 mg/L or less, still more preferably 0.1 mg/L or less. Within this range, the recovery rate and purity of lithium may be increased.

For example, the second leachate separated in step (d) may contain P in an amount of 350 mg/L or less, preferably 250 mg/L or less, more preferably 170 mg/L or less, still more preferably 100 mg/L or less, still more preferably 75 mg/L or less. Within this range, the recovery rate and purity of lithium may be increased.

In the present disclosure, Fe, P, and Li components in the leachate may be measured by any measurement method commonly used in the art to which the present invention belongs, for example, by ICP analysis. Specifically, 0.2 g of leachate is collected and placed in a conical tub. Then, the exact weight of the leachate is measured. Then, 0.1 ml of 70 % nitric acid is added thereto, 500 µl of 1000 mg/kg internal STD (Sc) is added thereto, and the volume of the mixture is adjusted to 50 ml with ultrapure water. Then, the components are measured by ICP. At this time, when necessary, the sample concentration may be further diluted with ultrapure water to fall within the standard material calibration curve.

For example, the second leaching residue separated in step (d) may be reused as part of the waste cathode powder, allowing steps (a) to (d) to be repeated. In this case, process costs may be reduced and economic efficiency may be further improved.

For example, in the second leachate separated in step (d), lithium may be present as an aqueous lithium sulfate (Li₂SO₄) solution.

For example, the method of the present invention may include step (e) of recovering lithium by concentrating the second leachate separated in step (d) to recover lithium sulfate or converting the lithium sulfate into lithium crystal salt.

For example, the lithium crystal salt may be lithium carbonate, lithium hydroxide, or a mixture thereof.

In addition, the present invention provides lithium obtained by the method of recovering lithium. In this case, high-purity lithium may be economically recovered without adding basic compounds.

FIG. 1 below is a flow chart of the method of recovering lithium from waste cathode material powder according to one embodiment of the present invention.

Referring to FIG. 1, first, waste cathode material powder is prepared (step S10).

The waste cathode material powder may include a cathode active material with an olivine structure obtained by crushing and pulverizing the cathode of a waste lithium-ion battery.

The cathode of a waste lithium-ion battery may be preferably a discarded lithium-ion battery cathode, a defective product generated during the process of coating a cathode active material layer on a current collector, or discarded cathode scrap, preferably a discarded lithium-ion battery cathode.

The cathode has a cathode active material layer on aluminum foil, and the cathode active material layer has a structure in which a binder binds a cathode active material and a conductive material after a solvent evaporates.

The cathode active material layer may preferably include a cathode active material, a binder, and a conductive material.

The step of obtaining waste cathode material powder from the cathode of the waste lithium-ion battery may include the following steps.

First, the cathode of a waste lithium-ion battery is crushed into an appropriate size. Here, the crushing involves cutting or shredding the cathode into easy-to-handle sizes. As a specific example, the crushed cathode may have a size of 1 cm × 1 cm. As a specific example, the crushing may be performed using a shredder.

Preferably, in consideration of equipment used in handling the cathode and subsequent processes, whether to perform the crushing, the size of pieces, and the like may be determined. For example, when equipment capable of continuous processing is used, since high fluidity is required, the cathode must be crushed into small pieces.

For example, the crushed cathode may be pulverized using a hand mill, a pin mill, a disc mill, a cutting mill, a hammer mill, a mixer, or a blender, as a specific example, a cutting mill. In this case, current collector pieces may be chopped into small pieces, and cathode material may be separated from the current collector pieces.

By sieving the pulverized cathode material, a waste cathode material powder including a cathode active material with an olivine structure is obtained. The sieving is performed to obtain waste cathode material powder having a uniform size and to separate current collector pieces.

The waste cathode material including a cathode active material with an olivine structure may be preferably lithium iron phosphate having an olivine structure, more preferably LiFePO₄ having an olivine structure. In this case, high-temperature stability, lifespan characteristics, and economic efficiency may be excellent.

Next, a portion of the waste cathode material powder is added to an acidic solution (step S20).

For example, the acidic solution may be a solution containing one or more selected from the group consisting of sulfuric acid, hydrochloric acid, hypochlorous acid, nitric acid, carbonic acid, acetic acid, and oxalic acid, as a specific example, an aqueous sulfuric acid solution. In this case, the recovery rate of lithium may be increased.

For example, the acidic solution may include an acid at a concentration of 0.5 to 0.8 mol, as a specific example, 0.67 mol per mol of the cathode active material. Within this range, elements in waste cathode material powder may be easily dissolved, thereby increasing the recovery rate and selectivity of lithium.

For example, the acidic solution may be a solution including an acid at a molar concentration (mol/L) of 0.2 to 0.6, specifically a molar concentration (mol/L) of 0.4. Within this range, elements in the waste cathode material may be dissolved, thereby increasing the recovery rate and selectivity of lithium.

For example, the acidic solution may have a pH of 0 to 3, as a specific example, a pH of 0 to 1. Within this range, the recovery rate and selectivity of lithium may be increased.

For example, the solid-to-liquid ratio of the waste cathode material powder to the acidic solution may be 1 g/6 ml to 1 g/15 ml, as a specific example, 1 g/10 ml. Within this range, elements in the waste cathode material may be easily dissolved, thereby increasing the recovery rate and selectivity of lithium.

Next, an aqueous hydrogen peroxide solution is added to the acidic solution containing the waste cathode material powder and leached to form a first leachate and a first leaching residue (step S30).

For example, the aqueous hydrogen peroxide solution acts as an oxidizing agent, facilitates the leaching of lithium from waste cathode material powder, and induces the precipitation of iron (Fe) and phosphorus (P) components in the form of FePO₄.

For example, the aqueous hydrogen peroxide (H₂O₂) solution may be added in an amount such that hydrogen peroxide constitutes 3 % by volume or more of the acidic solution, as a specific example, 3.9 % by volume of the acidic solution. Within this range, iron (Fe) and phosphorus (P) components may be precipitated in the form of FePO₄ and may be easily removed as first leaching residues.

For example, the aqueous hydrogen peroxide (H₂O₂) solution may be added in an amount such that the concentration of hydrogen peroxide is 1.6 mol or more, preferably 1.6 to 2.4 mol, as a specific example, 2 mol per mol of the cathode active material in the cathode material powder added to the acidic solution in step (a). Within this range, iron (Fe) and phosphorus (P) components may be precipitated in the form of FePO₄ and may be easily removed as first leaching residues. Here, the first leachate may contain some residual lithium, iron and phosphorus components.

For example, the aqueous hydrogen peroxide solution may be an aqueous solution including 20 to 40 % by weight, as a specific example, 30 to 32 % by weight of hydrogen peroxide. Within this range, iron (Fe) and phosphorus (P) components may be precipitated in the form of FePO₄ and may be easily removed as first leaching residues.

For example, the aqueous hydrogen peroxide (H₂O₂) solution may be added continuously or, as a specific example, batchwise. In this case, the pH of the acidic solution fluctuates little, allowing for sufficiently stable leaching of lithium and precipitation of iron and phosphorus components.

Step S30 may be performed at room temperature. In this case, waste cathode material powder may be easily leached to form the first leachate and the first leaching residue.

Step S30 may be performed under stirring. For example, step S30 may be performed at a stirring speed of 300 to 700 rpm, as a specific example, 500 rpm. Within this range, the time for waste cathode material powder to be leached into an acidic solution may be shortened.

For example, in step S30, the stirring may be performed for 10 to 150 minutes, as a specific example, 120 minutes. In this case, waste cathode material powder may be easily leached in an acidic solution, and the leaching time may be shortened.

Next, the first leachate and the first leaching residue are separated (step S40).

The separation may be performed using reduced pressure filtration. In this case, the leachate and the leaching residue may be easily separated using a simple process, reducing process costs and providing the advantage of eco-friendliness.

By separating the first leachate and the first leaching residue, iron and phosphorus components are precipitated in the form of FePO₄ and may be easily removed as the first leaching residues, thereby increasing the purity and recovery rate of lithium.

Next, an aqueous hydrogen peroxide solution and the remaining portion of the waste cathode material powder of step S10 are added to the separated first leachate to form a second leachate and a second leaching residue (step S50).

Step S50 is a step for increasing the purity of recovered lithium by removing iron and phosphorus components remaining in the first leachate.

In order to remove iron and phosphorus components remaining in the first leachate, a basic compound is added to increase the pH of the first leachate, but this increases process costs and reduces economic efficiency. To solve this problem, in the present invention, the aqueous hydrogen peroxide solution and the remainder of the waste cathode material powder of step S10 are added to the first leachate, so that H⁺ in the first leachate is consumed, thereby increasing the pH and removing residual iron and phosphorus components as second leaching residues.

For example, the waste cathode material powder of step S50 may be added in a weight 0.16 to 1.45 times, as a specific example, 0.2 to 1 time the weight of the waste cathode material powder added to the acidic solution in step S10. Within this range, iron and phosphorus components may be easily and economically removed by increasing the pH through the consumption of H⁺ in the first leachate without adding a basic compound, thereby increasing the purity and recovery rate of recovered lithium.

For example, the aqueous hydrogen peroxide solution may be added in an amount such that hydrogen peroxide constitutes at least 2.5 % by volume of the separated first leachate, as a specific example, at least 3 % by volume of the first leachate. Within this range, the purity and recovery rate of recovered lithium may be significantly increased by removing impurities such as iron and phosphorus components remaining in the first leachate.

For example, the concentration of hydrogen peroxide in step S50 may be 1.3 mol or more, preferably 1.3 to 2 mol, as a specific example, 1.6 mol per mol of the cathode active material in the waste cathode material powder of step S10. Within this range, the purity and recovery rate of recovered lithium may be increased by removing impurities such as iron and phosphorus components remaining in the first leachate.

For example, the second leachate formed in step S50 may have a pH of 5.5 or more, as a specific example, a pH of 6.5 to 9. Within this range, iron and phosphorus components may be easily and economically removed by increasing the pH of the second leachate without adding a basic compound, thereby increasing the purity and recovery rate of recovered lithium.

Next, the formed second leachate and second leaching residue are separated (step S60).

For example, separation of the second leachate and the second leaching residue formed in step S50 may be performed using reduced pressure filtration. In this case, the leachate and the leaching residue may be easily separated through a simple process, process costs may be reduced, and environmental friendliness may be achieved.

For example, the separated second leaching residue may include Fe(OH)₃ and LiFePO₄. In this case, iron and phosphorus components remaining in the first leachate may be removed, and thus the recovery rate and purity of lithium may be increased.

For example, the separated second leachate may have an Fe content of 30 mg/L or less, as a specific example, 0.1 mg/L or less. Within this range, the recovery rate and purity of lithium may be increased.

For example, the separated second leachate may have a P content of 350 mg/L or less, as a specific example, 75 mg/L or less. Within this range, the recovery rate and purity of lithium may be increased.

For example, in the separated second leachate, lithium may be present as an aqueous lithium sulfate (Li₂SO₄) solution.

For example, the separated second leaching residue may include Fe(OH)₃ and LiFePO₄.

For example, the separated second leaching residue may be used as part of the waste cathode material powder of step S10 and added to the acidic solution of step S20. In this case, process costs may be reduced, resulting in excellent economic efficiency.

Next, lithium is recovered from the separated second leachate (step S70).

For example, the separated second leachate may be concentrated or converted into lithium crystalline salt to recover lithium. In this case, high-purity lithium may be recovered.

The concentration may preferably be performed using reduced pressure evaporation. As a specific example, the concentration may be performed directly by reduced pressure evaporation of the Li-dissolved leachate without a separate cooling process. In this case, high-purity lithium may be obtained with a high recovery rate.

For example, the reduced pressure evaporation may be performed at 70 to 90 °C under 5 to 20 mbar, as a specific example, at 80 °C under 10 mbar. In this case, high-purity lithium may be obtained stably with a high recovery rate in a short period of time.

The lithium crystal salt may be, for example, lithium carbonate, lithium hydroxide or a mixture thereof.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

The cathode of a waste lithium-ion battery was crushed using a shredder and then pulverized using a cutting mill to separate a current collector. The waste cathode material from which the current collector was separated was sieved to obtain cathode material powder having an olivine structure. As a result of X-ray diffraction analysis (XRD) of the obtained cathode material powder, it was confirmed that the powder contained an LFP cathode active material with an olivine structure.

A portion (150 g) of the prepared waste cathode material powder (152 g) containing an LFP cathode active material having an olivine structure was added to 1500 ml of an aqueous sulfuric acid solution having a molar concentration of 0.4 (mol/L) at room temperature. Then, 195 ml of an aqueous H₂O₂ solution with a concentration of 30 % by weight was added thereto batchwise under stirring to form a first leachate and a first leaching residue. At this time, the mol number of cathode active material in the cathode material was measured through ICP analysis, and sulfuric acid was equivalent to 0.67 mol based on 1 mol of the cathode active material, and, in 195 ml of the aqueous hydrogen peroxide solution, the amount of hydrogen peroxide was 3.9 % by volume for 1500 ml of the aqueous sulfuric acid solution, and hydrogen peroxide was equivalent to 2 mol based on 1 mol of cathode active material in the waste cathode material powder added to the acidic solution. At this time, stirring was performed at 500 rpm for 2 hours. When the mol number of cathode active material in the cathode material was measured, 0.01 g of cathode material, 3 mL of HCl, and 0.5 mL of H₂O₂ were added to a conical tube, mixed, and heated to dissolve the mixture. Then, when the cathode material was dissolved, the dissolved cathode material was placed in a 50 mL tube, diluted, and the contents (mol) of metal components were measured by ICP analysis.

The formed first leachate and first leaching residue were separated by reduced pressure filtration to obtain the first leachate.

The results of ICP analysis of the separated first leachate showed that the Fe content was 446 mg/L and the P content was 409 mg/L.

10 ml of an aqueous H₂O₂ solution at a concentration of 30 % by weight and the remaining portion (2 g) of the waste cathode material powder including an LFP cathode active material with an olivine structure were added to 100 ml of the separated first leachate batchwise under stirring to form a second leachate and a second leaching residue, and the pH was measured. At this time, 2 g of the waste cathode material powder was 0.2 times the weight of cathode material powder added to the acidic solution. In 10 ml of the aqueous hydrogen peroxide solution, the hydrogen peroxide was 3% by volume for 100 ml of the first leachate, and hydrogen peroxide corresponded to 1.6 mol based on 1 mol of cathode active material in the waste cathode material powder added to the acidic solution. At this time, stirring was performed at 500 rpm for 1 hour.

The formed second leachate and second leaching residue were separated by reduced pressure filtration.

The contents of Li, Fe, and P were measured by ICP analysis using the separated second leachate.

### Example 2

The same procedure as in Example 1 was performed, except that 153 g of the waste cathode material powder containing an LFP cathode active material with an olivine structure was prepared, a portion (150 g) thereof was added to 1500 ml of an aqueous sulfuric acid solution at a molar concentration of 0.4 (mol/L) at room temperature, and 10 ml of an aqueous H₂O₂ solution at a concentration of 30 % by weight and the remaining portion (3 g) of the waste cathode material powder containing an LFP cathode active material with an olivine structure were added batchwise to 100 ml of the separated first leachate under stirring.

### Example 3

The same procedure as in Example 1 was performed, except that 155 g of the waste cathode material powder containing an LFP cathode active material with an olivine structure was prepared, a portion (150 g) thereof was added to 1500 ml of an aqueous sulfuric acid solution at a molar concentration of 0.4 (mol/L) at room temperature, and 10 ml of an aqueous H₂O₂ solution at a concentration of 30 % by weight and the remaining portion (5 g) of the waste cathode material powder containing an LFP cathode active material with an olivine structure were added batchwise to 100 ml of the separated first leachate under stirring.

### Example 4

The same procedure as in Example 1 was performed, except that 160 g of the waste cathode material powder containing an LFP cathode active material with an olivine structure was prepared, a portion (150 g) thereof was added to 1500 ml of an aqueous sulfuric acid solution at a molar concentration of 0.4 (mol/L) at room temperature, and 10 ml of an aqueous H₂O₂ solution at a concentration of 30 % by weight and the remaining portion (10 g) of the waste cathode material powder containing an LFP cathode active material with an olivine structure were added batchwise to 100 ml of the separated first leachate under stirring.

### Comparative Example 1

In Example 1, pH measurement and ICP analysis were performed using the separated first leachate, and subsequent steps were not performed.

### Comparative Example 2

The same procedure as in Example 1 was performed, except that 151 g of the waste cathode material powder containing an LFP cathode active material with an olivine structure was prepared, a portion (150 g) thereof was added to 1500 ml of an aqueous sulfuric acid solution at a molar concentration of 0.4 (mol/L) at room temperature, and 10 ml of an aqueous H₂O₂ solution at a concentration of 30 % by weight and the remaining portion (1 g) of the waste cathode material powder containing an LFP cathode active material with an olivine structure were added batchwise to 100 ml of the separated first leachate under stirring.

### Comparative Example 3

The same procedure as in Example 1 was performed, except that 170 g of the waste cathode material powder containing an LFP cathode active material with an olivine structure was prepared, a portion (150 g) thereof was added to 1500 ml of an aqueous sulfuric acid solution at a molar concentration of 0.4 (mol/L) at room temperature, and 10 ml of an aqueous H₂O₂ solution at a concentration of 30 % by weight and the remaining portion (20 g) of the waste cathode material powder containing an LFP cathode active material with an olivine structure were added batchwise to 100 ml of the separated first leachate under stirring.

### Comparative Example 4

The same procedure as in Example 1 was performed, except that 152 g of the waste cathode material powder containing an LFP cathode active material with an olivine structure was prepared, a portion (150 g) thereof was added to 1500 ml of an aqueous sulfuric acid solution at a molar concentration of 0.4 (mol/L) at room temperature, the remaining portion (2 g) of the waste cathode material powder containing an LFP cathode active material with an olivine structure was added batchwise to 100 ml of the separated first leachate under stirring, and the aqueous H₂O₂ solution was not added.

### [Test Example I: pH measurement and Li, Fe, and P content measurement]

Using leachates obtained in Examples 1 to 4 and Comparative Examples 1 to 4, pH and Li, P, and Fe contents were measured by ICP analysis, and the results are shown in Table 1 below.
* pH measurement: Measured using Thermo Scientific Orion Star A Series at room temperature.
* ICP analysis: 0.2 g of leachate was collected and placed in a conical tub. Then, the exact weight of the leachate was measured. Then, 0.1 ml of 70 % nitric acid was added thereto, 500 µl of 1000 mg/kg internal STD (Sc) was added thereto, and the volume of the mixture was adjusted to 50 ml with ultrapure water. Then, the contents of Li, Fe, and P were measured by ICP.

**[Table 1]**

| Classification | Li content (mg/L) | Fe content (mg/L) | P content (mg/L) | pH |
|---|---|---|---|---|
| Example 1 | 4351 | 0 | 63.5 | 6.65 |
| Example 2 | 4490 | 0 | 97.9 | 8.23 |
| Example 3 | 4383 | 0 | 164 | 8.7 |
| Example 4 | 4727 | 0 | 305 | 9.04 |
| Comparative Example 1 | 4212 | 446 | 409 | 1.6 |
| Comparative Example 2 | 4188 | 70 | 196 | 2.04 |
| Comparative Example 3 | 4017 | 0 | 398 | 8.84 |
| Comparative Example 4 | 4545 | 0 | 412 | 8.95 |

As shown in Table 1, it was confirmed that Examples 1 to 4 had no Fe component, a reduced P component content, and an improved purity of lithium compared to Comparative Examples 1 to 4. More specifically, in comparison with Examples 1 to 4 according to the present invention in which the Fe content is 30 mg/L or less and the P component is 350 mg/L or less, in the case of Comparative Example 1 in which hydrogen peroxide and the remaining portion of the waste cathode material powder were not added to the first leachate, the Fe and P contents were very high; in the case of Comparative Example 2 in which the remaining portion (1 g) of the waste cathode material powder was added to the first leachate, the Fe content was still high; and in the case of Comparative Example 3 in which the remaining portion (20 g) of the waste cathode material powder was added to the first leachate, the P content was still high.

In addition, in the case of Comparative Example 4 in which the aqueous hydrogen peroxide solution was not added to the separated first leachate and only the remaining portion of the waste cathode material powder was added thereto, the P content was very high.

In addition, in the case of Comparative Example 3 in which an excess (20 g) of the cathode material powder was added, compared to Example 4 in which 10 g of the cathode material powder was added, the pH was slightly lower due to the formation of Li₃PO₄. Accordingly, it was expected that the recovery rate of lithium would decrease due to the loss of Li.

## Claims

1. A method of recovering lithium, comprising:
(a) adding a portion of a cathode material powder comprising a cathode active material with an olivine structure and an aqueous hydrogen peroxide solution to an acidic solution to form a first leachate and a first leaching residue;
(b) separating the first leachate and the first leaching residue;
(c) adding an aqueous hydrogen peroxide solution and a remaining portion of the cathode material powder of step (a) to the separated first leachate to form a second leachate and a second leaching residue; and
(d) separating the second leachate and the second leaching residue,
wherein a weight of the cathode material powder added in step (c) is 0.16 to 1.45 times a weight of the cathode material powder added into the acidic solution in step (a).

2. The method according to claim 1, wherein the cathode material having an olivine structure is a compound represented by Chemical Formula 1 below.
[Chemical Formula 1] **Li₁₊ₐFe_{1-b}M_{b}(PO_{4-c})X_{c}**
wherein M comprises one or more elements selected from the group consisting of Al, Mg, Ni, Co, Mn, Ti, Ga, Cu, V, Nb, Zr, Ce, In, Zn, and Y; X comprises one or more elements selected from the group consisting of F, S, and N; and a, b, and c are -0.5≤a≤0.5, 0≤b≤0.5, and 0≤c≤0.1, respectively.

3. The method according to claim 2, wherein the cathode material having an olivine structure comprises lithium iron phosphate.

4. The method according to claim 1, wherein the cathode material powder is obtained by crushing and pulverizing a cathode of a waste lithium-ion battery and separating a cathode material powder and a current collector.

5. The method according to claim 1, wherein, in step (a), the acidic solution comprises 0.5 to 0.8 mol of an acid per mol of the cathode active material in the cathode material powder added to the acidic solution in step (a).

6. The method according to claim 1, wherein, in step (a), the acidic solution has a molar concentration (mol/L) of 0.2 to 0.6.

7. The method according to claim 1, wherein, in step (a), the acidic solution is a solution containing one or more selected from the group consisting of sulfuric acid, hydrochloric acid, hypochlorous acid, nitric acid, carbonic acid, acetic acid, and oxalic acid.

8. The method according to claim 1, wherein, in step (a), the aqueous hydrogen peroxide solution is added in an amount such that hydrogen peroxide constitutes at least 3 % by volume of the acidic solution.

9. The method according to claim 1, wherein, in step (c), the aqueous hydrogen peroxide solution is added in an amount such that hydrogen peroxide constitutes at least 2.5 % by volume of the separated first leachate.

10. The method according to claim 1, wherein the second leachate formed in step (c) has a pH of 5.5 or more.

11. The method according to claim 1, wherein the second leaching residue separated in step (d) comprises Fe(OH)₃ and LiFePO₄.

12. The method according to claim 1, wherein the second leachate separated in step (d) has an Fe content of 30 mg/L or less and a P content of 350 mg/L or less.

13. The method according to claim 1, wherein the second leaching residue separated in step (d) is added to the acidic solution of step (a).

14. The method according to claim 1, wherein, in steps (b) and (d), separation of the leachate and the leaching residue is performed using reduced pressure filtration.
